# EUROPÄISCHE PATENTSCHRIFT

(11) **EP 1 549 188 B1**
(45) Veröffentlichungstag und Bekanntmachung des Hinweises auf die Patenterteilung: **04.07.2007**
(21) Anmeldenummer: 03757882.0
(22) Anmeldetag: 22.09.2003
(51) Int. Cl.: A47J 43/07

(54) **VERSCHLUSS EINES KÜCHENGERÄTS**
SEAL FOR A KITCHEN APPLIANCE
FERMETURE D'UN APPAREIL DE CUISINE

(30) Priorität: 25.09.2002 DE 10244599
(43) Veröffentlichungstag der Anmeldung: 06.07.2005
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, 3333 Ljubno ob Savin (SI); ZIBRET, Igor, 3327 Smartno ob Paki (SI)
(86) Internationale Anmeldenummer: PCT/EP2003/010529
(87) Internationale Veröffentlichungsnummer: WO 2004/030505

(56) Entgegenhaltungen:
- DE-C- 333 081
- DE-C- 369 037
- DE-U- 7 900 590
- US-A- 5 419 429

## Beschreibung

Die vorliegende Erfindung betrifft eine Vorrichtung zum Verschließen eines zylinderförmigen Behältnisses eines Küchengeräts mit einem Deckabschnitt. Darüber hinaus betrifft die vorliegende Erfindung ein Verfahren zum Abdichten eines Behältnisses eines Küchengeräts, in dem sich ein rotierend fließendes Medium befindet.

Bei einer Vielzahl von Küchengeräten werden zur Zerkleinerung oder zum Mischen von Lebensmitteln rotierende Werkzeuge in entsprechend gestalteten Schüsseln eingesetzt. Während des Arbeitsvorgangs sind die Schüsseln insbesondere bei sehr rasch rotierenden Werkzeugen abzudecken beziehungsweise abzudichten, um ein Austreten des in der Regel flüssigen Mediums oder ein Spritzen zu vermeiden.

Zu derartigen Küchengeräten zählen auch sogenannte Chopper (Zerhacker), mit denen gröbere Bestandteile von Lebensmitteln zerkleinert und gegebenenfalls zu Mus verarbeitet werden können. Die Chopper können aber auch zum Mischen von flüssigen beziehungsweise breiartigen Lebensmitteln sowie zum Schlagen von Sahne und dergleichen verwendet werden.

Der Aufbau eines Choppers besteht typischerweise aus einem schüsselartigen Behältnis und einer mit hoher Drehzahl rotierenden Funktionseinheit (Arbeitswerkzeug), die in der Regel am Boden des Behältnisses angeordnet ist. Der Antrieb dieser Funktionseinheit beziehungsweise dieses Werkzeugs kann unterhalb oder oberhalb des Behältnisses vorgesehen sein. Das Behältnis wird meist mit einem Deckel verschlossen, um ein Herausspritzen aus dem Behältnis zu vermeiden. Bei sehr flüssigen Medien beziehungsweise Lebensmitteln kann die rotierende Funktionseinheit bewirken, dass die Flüssigkeit durch die rasch rotierende Zerhack- oder Mischeinheit so sehr in Rotation gerät, dass der Flüssigkeitspegel an der Wand des Behältnisses über den Rand hinaus steigt. Um dies zu vermeiden, ist eine Abdeckung vorgesehen, die zumindest am Rand der Schüssel beziehungsweise des Behältnisses flüssigkeitsdicht ist. Zur Abdichtung werden häufig spezielle Dichtringe eingesetzt, die eine ausreichende Dichtfunktion gewährleisten. Insbesondere bei Werkstoffen, die unflexibel sind und höhere Toleranzen aufweisen, z. B. Glas und harte Kunststoffe, ist eine ausreichende Dichtwirkung ohne Abdichtkomponenten kaum oder nur mit sehr hohem Aufwand realisierbar. Daher werden bei diesen Werkstoffen zusätzliche Abdichtkomponenten eingesetzt, die zwar eine größere Toleranz von Schüssel und Deckel erlauben, aber auch einen höheren Montageaufwand bedeuten.

Eine gattungsgemäße Vorrichtung ist aus der deutschen Offenlegungsschrift DE 26 53 679 A1 bekannt. Das dort beschriebene handgetriebene Haushaltsgerät zum Mischen von Nahrungsmitteln, Sahneschlagen und Eischneeschlagen weist eine Rührschüssel und ein Deckelteil, das komplementär in die Rührschüsselöffnung passend ausgebildet ist und einen Antriebsmechanismus für mindestens einen Quirl besitzt, auf. Der Antriebsmechanismus auf der der Schüssel zugewandten Seite des Deckelteils umfasst eine zentral drehbar gelagerte Trageplatte, die exzentrisch den mindestens einen Quirl trägt. Das Trageteil spannt sich über das Innere der Rührschüssel derart, dass im Wesentlichen die gesamte Unterseite des Deckelteils wirksam gegen Nahrungsmittelteilchen abgeschirmt ist, die im Betrieb nach oben geschleudert werden. Wenn flüssiges Material in eine Ausnehmung in dem Deckelteil über den Scheibenkörper des Trägerteils hinaus eindringen sollte, wird es radial auswärts durch die Zentrifugalkraft geschleudert und tropft an der Innenwandungsfläche des flanschförmigen Deckeloberteils sowie über die etwas schräg verlaufenden äußeren Abschnitte der Oberseite des Scheibenkörpers des Trägerteils ab. Danach erfolgt das Auswerfen durch einen schmalen Umfangsspalt zwischen der Umfangskante des Trägerteils und der benachbarten unteren Kante des flanschförmigen Deckeloberteils.

Ferner ist in dem deutschen Gebrauchsmuster DE 79 00 590 U1 ein Deckel für beheizbare Haushaltsmixer beschrieben. Der Deckel mit Verriegelungseinrichtung weist eine zentrische Einfüllöffnung sowie einen konzentrisch umlaufenden, U-förmigen Dichtring zum Mixgutbehälter auf. Damit der Deckel absolut dicht abschließt, sind an der Deckelunterseite zwischen Einfüllöffnungsrand und umlaufendem, U-förmigem Dichtring tangential verlaufende Rippen vorgesehen. Der Deckel wird von einem gabelförmigen Arm auf dem Mixgutbehälter mit einer vorgegebenen Kraft gepresst und gehalten. Wird nun der Haushaltsmixer in Betrieb gesetzt, so bildet sich durch die Anordnung und Gestaltung der Mixermesser ein Flüssigkeitsring, welcher an der Behälterwand nach oben geschleudert wird. Durch diesen Flüssigkeitsring wird auf die Deckelunterseite eine Kraft in vertikaler Richtung ausgeübt, die in Abhängigkeit von der Messerform und der durch sie erzeugten Rotationsenergie auf den Deckel einwirkt. Diese Energie kann so groß sein, dass die eingestellte Kraft auf den Deckel mittels des Arms überwunden und das dünnflüssige Mixgut herausgeschleudert wird. Die Rippen bezwecken nun, dass die vertikale Kraft des drehenden Flüssigkeitsrings erheblich vermindert wird, denn der Flüssigkeitsring wird stets an den tangierenden Rippen gebrochen.

Im übrigen sei auf die US 5,419,429 A, die DE 333 081 C1 sowie die DE 369 037 C hingewiesen.

Die Aufgabe der vorliegenden Erfindung besteht darin, eine Vorrichtung und ein Verfahren zum Abdichten eines Behältnisses eines Küchengeräts vorzuschlagen, bei der/dem die Dichtwirkung durch alternative Maßnahmen erzielt wird.

Erfindungsgemäß wird diese Aufgabe gelöst durch ein küchengerät zum Verschließen eines zylinderförmigen Behältnisses des Küchengeräts mit einem Deckabschnitt, wobei der Deckabschnitt so dimensioniert ist, dass in dem Zustand, in dem das Behältnis mit dem Deckel verschlossen ist, der Deckabschnitt unterhalb einer Oberkante des Behältnisses angeordnet ist und zwischen der Innenwand des Behältnisses und dem Au-ßenumfang des Deckabschnitts ein ringförmiger Spalt besteht, der eine Verbindung zwischen dem Innenraum des Behältnisses und der Umgebung bewerkstelligt.

Ferner ist gemäß der vorliegenden Erfindung vorgesehen ein Verfahren zum Abdichten eines Behältnisses eines Küchengeräts mit einem rotierend fließenden Medium durch Aufbringen eines Deckels auf das Behältnis, und Reduzieren des Drucks am Außenumfang in der Oberschicht des rotierend fließenden Mediums mittels eines Spalts, der sich zwischen der Innenwand des Behältnisses und dem Außenumfang Deckels erstreckt, so dass nur eine definierte Menge des Mediums über den Deckel dringt.

In vorteilhafter Weise wird das Fluid beziehungsweise fließende Medium, das bei rotierenden Arbeitswerkzeugen über den Deckel nach oben dringt, entweder durch eine Rückflusseinrichtung, z.B. den zumindest abschnittsweise radial nach oben oder unten geneigten Deckel, zum Zentrum des Deckels und zurück in den Behälter geleitet oder über dem Deckel solange aufgestaut, bis das Eigengewicht ein weiteres Druchdringen des Fluids durch den Spalt verhindert. Somit wird keine Flüssigkeit aus dem Behältnis beziehungsweise der Schüssel geschleudert. Insbesondere wird durch den Spalt auch vermieden, dass ein Druckstoß beim Anschalten des Küchengeräts den Deckel von dem Behältnis löst.

Bei einer vorteilhaften Ausgestaltungsform befindet sich ein Bund am Außenumfang des Deckabschnitts und erstreckt sich im Wesentlichen senkrecht zu diesem. Dieser Bund sorgt für einen Umlaufspalt zur Wand der Schüssel. In diesem Spalt wird die rotierende Flüssigkeit abgebremst und es findet ein weiterer Druckabfall statt, so dass noch weniger Flüssigkeit an die Oberfläche des Deckabschnitts gelangt.

Der Deckabschnitt ist günstigerweise durch einen ringförmigen Befestigungsabschnitt am Innenrand der Schüssel befestigt. Stege oder ein Ringabschnitt mit Durchbrüchen dienen/dient zur Aufhängung des Deckabschnitts an dem Befestigungsabschnitt. Die Durchbrüche zum Durchlassen der aufsteigenden Flüssigkeit können als Bohrungen ausgestaltet und gitterförmig angeordnet sein.

Im Zentrum oder in der Nähe des Zentrums des Deckabschnitts ist vorzugsweise mindestens ein Durchbruch zum Abfließen des Mediums von dem geneigten Deckabschnitt in das Behältnis vorgesehen. Damit kann die den Deckabschnitt übersteigende Flüssigkeit in das Zentrum der Schüssel zurückfließen, wo der Flüssigkeitspegel aufgrund der Zentrifugalkräfte geringer ist.

Im Zentrum des Deckabschnitts kann ein Zentralabschnitt vorgesehen sein, der den Deckabschnitt versteift und einen zentralen Durchbruch abdecken kann. Weiterhin kann dieser Zentralabschnitt oder der Deckabschnitt mit einer Bohrung zum Durchführen einer Funktionskomponente, zum Beispiel der Antriebswelle eines Drehmessers, versehen sein.

Die vorliegende Erfindung wird nun anhand der beigefügten Zeichnungen näher erläutert, in denen zeigen:
- Figur 1: eine Querschnittsansicht eines erfindungsgemäßen Choppers; und
- Figur 2: eine Querschnittsansicht einer Schüssel mit erfindungsgemäßer Abdeckung.

Die nachfolgend aufgeführten Ausführungsformen stellen bevorzugte Ausführungsbeispiele der vorliegenden Erfindung dar.

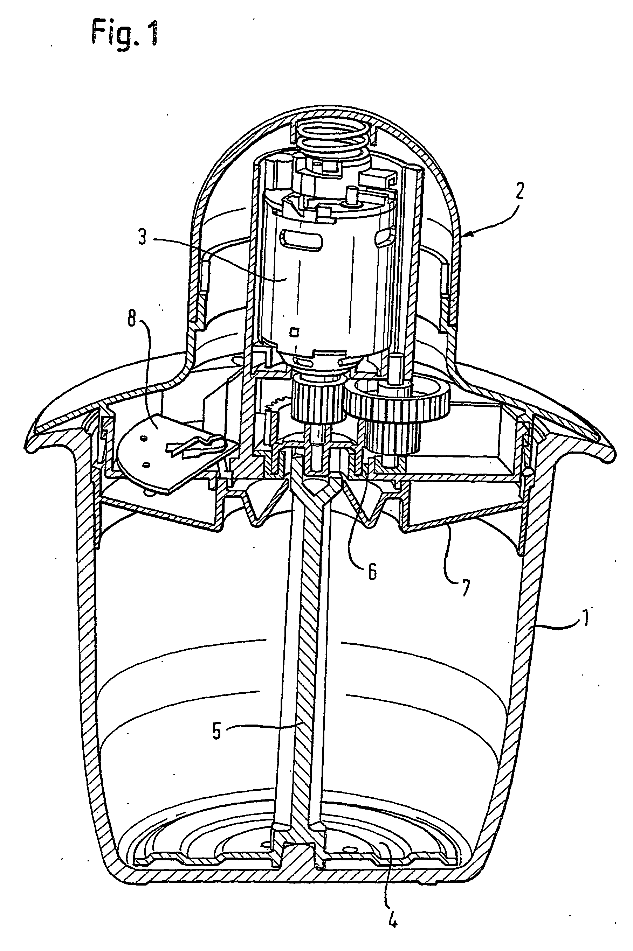

Figur 1 zeigt einen Querschnitt durch einen Chopper. Der Chopper umfasst eine Schüssel 1 und einen Deckel 2. Der Deckel 2 dient nicht nur zum Abdichten der Schüssel 1 sondern beinhaltet gleichzeitig einen elektrischen Kleinmotor 3 einschließlich Getriebe zum Antrieb einer Schlagscheibe 4, die am Boden der Schüssel 1 drehbar gelagert ist. Eine Welle 5 überträgt das Drehmoment vom Getriebe des Elektromotors 3 zu der Schlagscheibe 4. Die Schlagscheibe 4 dient beispielsweise zum Schlagen von Eiklar oder Sahne.

Die Lagerung der Welle 5 in dem Deckel 2 unterhalb des Getriebes des Elektromotors 3 erfolgt durch ein Axial/Radial-Gleitlager 6.

An der Unterseite des Deckels zum Inneren der Schüssel zugewandt befindet sich ein Deckabschnitt 7. Dieser Deckabschnitt dient zum Abdecken beziehungsweise Abdichten des in der Schüssel 1 befindlichen fließenden Mediums, wie Flüssigkeiten, Brei, Eiswürfel, etc. Der Deckabschnitt 7 ist zur Durchführung der Welle 5 im Zentrum durchbrochen.

Der Deckel 2 weist ferner einen integrierten Schalter 8 auf, der mit einer Sicherheitsfunktion ausgestattet ist. Erst wenn der Deckel 2 auf die Schüssel 1 ordnungsgemäß aufgebracht ist, erlaubt dieser Sicherheitsschalter 8 den Betrieb des Choppers.

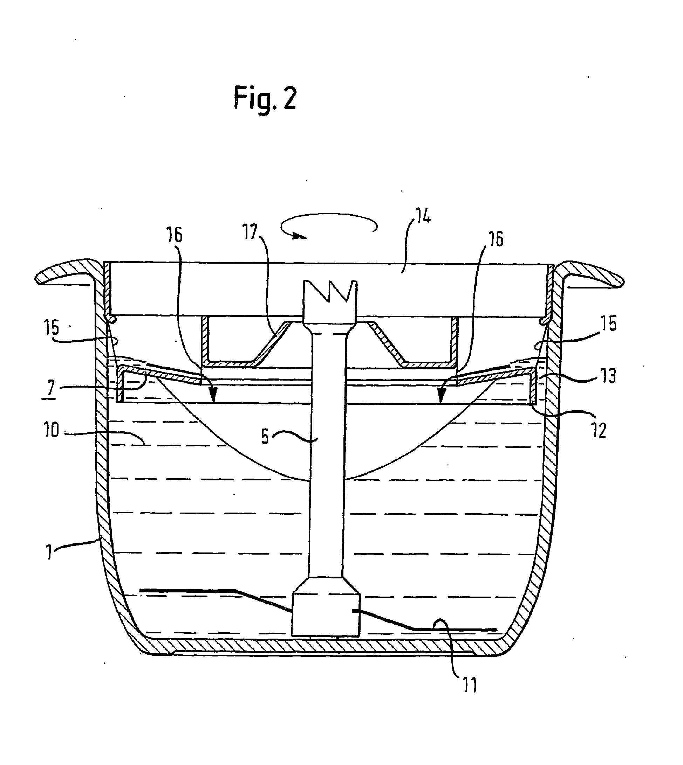

Figur 2 zeigt nun den erfindungsgemäßen Deckabschnitt 7 und dessen Funktionsweise im Detail. In der Schüssel 1 befindet sich ein flüssiges Medium10. Ein Messer 11 dient zum Zerkleinern fester Bestandteile in der Flüssigkeit 10. Der Antrieb des Messers 11 erfolgt über die Antriebswelle 5.

Durch die Drehbewegung des Messers 11 wird die Flüssigkeit 10 ebenfalls in Drehung versetzt. Dadurch steigt der Flüssigkeitspegel am Rand der Schüssel an, während er im Zentrum abfällt. Am Rand der Schüssel erreicht der Pegel die Unterseite des Deckabschnitts 7. Am Außenumfang des Deckabschnitts 7 ist ein Bund 12 angebracht, der ins Innere der Schüssel 1 weist. Zwischen dem Bund 12 und der Innenwand der Schüssel 1 ergibt sich ein Umfangsspalt 13.

Der Deckabschnitt 7 wird durch einen Ringabschnitt bestehend aus einem Befestigungsabschnitt 14 und Stegen beziehungsweise einem Ringgitter 15 am oberen Rand der Schüssel 1 gehalten. Der Befestigungsabschnitt 14 rastet im obersten Bereich der Innenwand der Schüssel 1 in eine entsprechende Vertiefung ein, so dass ein vertikales Rutschen nach unten verhindert wird. Zwischen dem unteren Rand des Befestigungsabschnitts 14 und dem Außenumfang des Deckabschnitts 7 befindet sich das Ringgitter 15, womit der Deckabschnitt 7 am gesamten Umfang aufgehängt ist. Alternativ kann das Ringgitter 15 auch durch eine Mehrzahl von Stegen ersetzt werden, die über den Umfang des Deckabschnitts 7 verteilt sind und diesen an dem Befestigungsabschnitt 14 halten.

Der Deckabschnitt 7 ist zum Zentrum hin nach unten geneigt und weist dort eine Zentralöffnung oder in der Nähe des Zentrums konzentrisch mit dem Deckabschnitt 7, ringförmig angeordnete Durchbrüche 16 auf.

Ein Zentralabschnitt 17, der mit dem Deckabschnitt 7 einteilig verbunden sein kann, dient zur Abdeckung im Bereich des Zentrums der Schüssel 1. Darüber hinaus erfüllt der Zentralabschnitt 17 die Funktion des Versteifens des Deckabschnitts 7 im Zentrumsbereich durch senkrecht nach oben oder schräg nach oben weisende Abschnitte.

Die rotierende Flüssigkeit 10 im Inneren der Schüssel 1 würde ohne den Deckabschnitt 7 bis zum oberen Rand der Schüssel durch die Zentrifugalkraft ansteigen und u. U. aus der Schüssel geschleudert werden. Der Spalt 13 zwischen dem Außenumfang des Deckabschnitts 7 beziehungsweise dem Bund 12 einerseits und der Innenwand der Schüssel 1 andererseits bewirkt nun aber einen derartigen Geschwindigkeits- bzw. Druckabfall, dass die durch den Spalt 13 dringende Flüssigkeitsmenge ohne weiteres über den zum Zentrum geneigten Deckabschnitts 12 durch die Durchbrüche 16 ins Zentrum der Schüssel zurückfließen kann. Das Ringgitter 15 behindert dabei nicht den Durchfluss der durch den Spalt 13 nach oben steigenden Flüssigkeit, so dass diese ungehindert über den Deckabschnitt 7 in Richtung zum Zentrum fließen kann. Im Spalt 13 verliert die Flüssigkeit durch Wirbel und entsprechende Reibung ihre Rotationsenergie, so dass praktisch keine Zentrifugalkraft mehr vorliegt, die ein Rückfließen des Flüssigkeitsanteils ins Zentrum der Schüssel 1 behindern könnte.

Die erfindungsgemäße Abdeckung mit dem schräg zum Zentrum verlaufenden Deckabschnitt 7 und dem Spalt 13 verhindert damit, dass der Flüssigkeitspegel im Bereich der Wand der Schüssel 1 bis zu dem Ringabschnitt 14 oder sogar zur Oberkante der Schüssel 1 ansteigt. Damit ist eine spezielle Abdichtung auch beispielsweise zwischen dem Befestigungsabschnitt 14 und der Schüssel 1 nicht mehr notwendig. Durch den Wegfall einer speziellen Dichtung kann die Stückzahl der verwendeten Einzelkomponenten reduziert und somit auch der Montageaufwand verringert werden. Darüber hinaus können größere Toleranzen zwischen Schüssel 1 und Deckel 2 akzeptiert werden. Dies ist insbesondere von Vorteil bei Glasschüsseln mit Kunststoffabdeckung. Ferner werden durch den Spalt weniger Vibrationen zwischen Schüssel und Deckel übertragen.

## Patentansprüche

1. Küchengerät mit einem Behältnis (1), in dessen Innenraum ein rotierendes_Arbeitswenkzeug (4; 11) ragt und das zum Verschließen einen Deckel (2) aufweist,
**dadurch gekennzeichnet, dass**
unterhalb einer Oberkante des Behältnisses (1) ein Deckabschnitt (7) angeordnet ist, der so dimensioniert ist, dass in dem Zustand, in dem das Behältnis (1) mit dem Deckel (2) verschlossen ist, der Deckabschnitt (7) zwischen dem Innenraum des Behältnisses (1) und einer Umgebung angeordnet ist und zwischen der Innenwand des Behältnisses (1) und dem Außenumfang des Deckabschnitts (7) ein ringförmiger Spalt (13) besteht, der eine Verbindung zwischen dem Innenraum des Behältnisses (1) und der Umgebung bewerkstelligt.

2. Vorrichtung nach Anspruch 1, die eine Rückflusseinrichtung zum Rücklauf eines aus dem Innenraum des Behältnisses (1) durch den Spalt (13) austretenden Fluids zurück in das Behältnis aufweist.

3. Vorrichtung nach Anspruch 1 oder 2, wobei die Rücklaufeinrichtung **dadurch** gebildet ist, dass der Deckabschnitt (7) zumindest abschnittsweise radial nach innen geneigt ist.

4. Vorrichtung nach einem der Ansprüche 1 bis 3, die einen Bund (12) am Außenumfang des Deckabschnitts (7) aufweist, der im Wesentlichen senkrecht zu dem Deckabschnitt (7) verläuft.

5. Vorrichtung nach einem der Ansprüche 1 bis 4, die einen Ringabschnitt (14, 15) mit mindestens einem Durchbruch am Außenumfang des Deckabschnitts (7) zu dessen Halterung aufweist, wobei sich der Ringabschnitt (14, 15) zumindest teilweise radial nach außen erstreckt und an einer Innenwand des Behältnisses (1) formschlüssig anbringbar ist.

6. Vorrichtung nach einem der Anspruch 3, wobei der Ringabschnitt (14, 15) mehrere Durchbrüche in Form von gitterförmig angeordneten Bohrungen oder abgetrennt durch Stege aufweist.

7. Vorrichtung nach Anspruch 5 oder 6, wobei der Ringabschnitt (14, 15) einen Befestigungsabschnitt (14) zur Befestigung des Deckabschnitts (7) in dem Behältnis aufweist.

8. Vorrichtung nach einem der Ansprüche 1 bis 7, die mindestens einen Durchbruch (16) im Zentrum oder in der Nähe des Zentrums des Deckabschnitts (7) zum Abfließen eines Mediums von dem geneigten Deckabschnitt in das Behältnis (1) aufweist.

9. Vorrichtung nach einem der Ansprüche 1 bis 8, die einen Zentralabschnitt (17) zum Versteifen des Deckabschnitts (7) aufweist

10. Vorrichtung nach einem der Ansprüche 1 bis 9, die eine Bohrung im Zentrum zur Durchführung einer Funktionseinheit (5) des Küchengeräts aufweist.

11. Verfahren zum Abdichten eines Behältnisses (1) eines Küchengeräts mit einem rotierend fließenden Medium (10) durch
Aufbringen eines Deckels (7) auf das Behältnis (1),
**gekennzeichent durch**
Reduzieren des Drucks am Außenumfang in der Oberschicht des rotierend fließenden Mediums (10) mittels eines Spalts (13), der sich zwischen der Innenwand des Behältnisses (1) und dem Außenumfang Deckels (7) erstreckt, so dass nur eine definierte Menge des Mediums (10) über den Deckel dringt.

12. Verfahren nach Anspruch 11, wobei das durch den Spalt (13) gedrungene Medium auf dem zumindest abschnittsweise radial nach oben oder unten geneigten Deckel (7) zu einem Durchbruch (16) im Zentrum oder in der Nähe des Zentrums des Deckels (7) zurück in das Behältnis fließt.

13. Verfahren nach Anspruch 11 oder 12, wobei zum Reduzieren des Drucks das rotierend fließende Medium (10) zwischen einem Bund (12), der am Außenumfang des Deckels (7) im Wesentlichen senkrecht zu diesem angeordnet ist, und der Innenwand des Behältnisses (1) fließt.

## Claims

1. Kitchen appliance with a container (1), into the interior space of which a rotating work tool (4; 11) projects and which has a cover (2) for closing, **characterised in that** arranged below an upper edge of the container (1) is a cover section (7) which is so dimensioned that in the state in which the container (1) is closed by the cover (2) the cover section (7) is arranged between the inner space of the container (1) and a surrounding space and an annular gap (13) which produces a connection between the interior space of the container (1) and the surrounding space is present between the inner wall of the container (1) and the outer circumference of the cover section (7).

2. Device according to claim 1, which has a return flow device for return back to the container of a fluid issuing from the interior space of the container (1) through the gap (13).

3. Device according to claim 1 or 2, wherein the return flow device is formed in that the cover section (7) is inclined radially inwardly at least in sections.

4. Device according to one of claims 1 to 3, which has a collar (12) at the outer circumference of the cover section (7), the collar extending substantially perpendicularly to the cover section (7).

5. Device according to one of claims 1 to 4, which has an annular section (14, 15) with at least one passage at the outer circumference of the cover section (7) for mounting thereof, wherein the annular section (14, 15) extends radially outwardly at least in part and can be mounted in shape-locking manner at an inner wall of the container (1).

6. Device according to claim 3, wherein the annular section (14, 15) has several passages in the form of bores, which are arranged in grid shape, or separated by webs.

7. Device according to claim 5 or 6, wherein the annular section (14, 15) has a fastening section (14) for fastening of the cover section (7) in the container.

8. Device according to one of claims 1 to 7, which has at least one passage (16) in the centre or in the vicinity of the centre of the cover section (7) for outflow of a medium from the inclined cover section into the container (1).

9. Device according to one of claims 1 to 8, which has a central section (17) for stiffening the cover section (7).

10. Device according to one of claims 1 to 9, which has a bore in the centre for the passage of a functional unit (5) of the kitchen appliance.

11. Method of sealing a container (1) of a kitchen appliance with a rotating, flowing medium (10) by mounting of a cover (7) on the container (1), **characterised by** reducing the pressure at the outer circumference in the upper layer of the rotating, flowing medium (10) by means of a gap (13) which extends between the inner wall of the container (1) and the outer circumference of the cover (7) so that only a defined quantity of the medium (10) penetrates over the cover.

12. Method according to claim 11, wherein the medium which has penetrated through the gap (13) flows on the cover (7), which is inclined radially upwardly or downwardly at least in sections, to a passage (16) in the centre or in the vicinity of the centre of the cover (7) back into the container.

13. Method according to claim 11 or 12, wherein for reducing the pressure the rotating, flowing medium (10) flows between a collar (12), which is arranged at the outer circumference of the cover (7) substantially perpendicularly thereto, and the inner wall of the container (1).

## Revendications

1. Appareil de cuisine avec un récipient (1), à l'intérieur duquel dépasse un outil de travail (4, 11) rotatif, lequel présente un couvercle (2) pour la fermeture,
**caractérisé en ce que**
au-dessous d'un bord supérieur du récipient (1) est disposée une partie couvercle (7) qui est dimensionnée de telle sorte que, dans l'état où le récipient (1) est fermé avec le couvercle (2), la partie couvercle (7) est disposée entre l'intérieur du récipient (1) et un environnement et entre la paroi intérieure du récipient (1) et le pourtour extérieur de la partie couvercle (7) est présente une fente (13) de forme annulaire, qui réalise la liaison entre l'intérieur du récipient (1) et l'environnement.

2. Dispositif selon la revendication 1, qui présente un dispositif de reflux pour le reflux d'un fluide sortant de l'intérieur du récipient (1) par la fente (13) dans le récipient.

3. Dispositif selon la revendication 1 ou 2, le dispositif de reflux étant formé par le fait que la partie couvercle (7) est inclinée au moins en partie radialement vers l'intérieur.

4. Dispositif selon l'une quelconque des revendications 1 à 3, qui présente une collerette (12) sur le pourtour extérieur de la partie couvercle (7), qui est agencée sensiblement perpendiculairement à la partie couvercle (7).

5. Dispositif selon l'une quelconque des revendications 1 à 4, qui présente une partie annulaire (14, 15) avec au moins un passage sur le pourtour extérieur de la partie couvercle (7) pour son support, la partie annulaire (14, 15) s'étendant au moins en partie radialement vers l'extérieur et pouvant être placée par conjugaison de forme sur une paroi intérieure du récipient (1).

6. Dispositif selon la revendication 3, la partie annulaire (14, 15) présentant plusieurs passages sous la forme de perçages disposés en forme de grille ou séparés par des nervures.

7. Dispositif selon la revendication 5 ou 6, la partie annulaire (14, 15) présentant une partie de fixation (14) pour la fixation de la partie couvercle (7) dans le récipient.

8. Dispositif selon l'une quelconque des revendications 1 à 7, qui présente au moins un passage (16) au centre ou à proximité du centre de la partie couvercle (7) pour l'écoulement d'une matière depuis la partie couvercle inclinée dans le récipient (1).

9. Dispositif selon l'une quelconque des revendications 1 à 8, qui présente une partie centrale (17) pour le renfort de la partie couvercle (7).

10. Dispositif selon l'une quelconque des revendications 1 à 9, qui présente un perçage au centre pour la mise en oeuvre d'une unité fonctionnelle (5) de l'appareil de cuisine.

11. Procédé pour étanchéifier un récipient (1) d'un appareil de cuisine avec une matière (10) circulant de façon rotative par application d'un couvercle (7) sur le récipient (1),
**caractérisé par**
la réduction de la pression sur le pourtour extérieur dans la couche supérieure de matière (10) circulant de façon rotative au moyen d'une fente (13), qui s'étend entre la paroi intérieure du récipient (1) et le pourtour extérieur du couvercle (7), de sorte que seule une quantité définie de la matière (10) pénètre par le couvercle.

12. Procédé selon la revendication 11, la matière parvenue par la fente (13) circulant sur le couvercle (7) incliné au moins en partie radialement vers le haut ou vers le bas vers un passage (16) au centre ou à proximité du centre du couvercle (7) pour revenir dans le récipient.

13. Procédé selon la revendication 11 ou 12, la matière (10) circulant de façon rotative circulant pour la réduction de la pression entre une collerette (12), qui est disposée sur le pourtour extérieur du couvercle (7) sensiblement perpendiculairement à celui-ci, et la paroi intérieure du récipient (1).
